# EUROPÄISCHE PATENTSCHRIFT

(11) **EP 1 686 584 B1**
(45) Veröffentlichungstag und Bekanntmachung des Hinweises auf die Patenterteilung: **13.08.2008**
(21) Anmeldenummer: 06090009.9
(22) Anmeldetag: 25.01.2006
(51) Int. Cl.: G11B 23/03, G11B 33/14, A47G 23/03, A47G 23/032

(54) **Bierdeckel mit Compact Disc**
Beer mat comprising compact disc
Dessous de verre pourvu d'un disque compact

(30) Priorität: 01.02.2005 WO PCT/DE2005/001652
(43) Veröffentlichungstag der Anmeldung: 02.08.2006
(73) Patentinhaber: DOCdata Germany Berlin Optical Disc GmbH, 13355 Berlin (DE)
(72) Erfinder: Weiss, Volker, c/o DOCdata Germany Berlin, 13355 Berlin (DE)
(74) Vertreter: Jungblut, Bernhard Jakob

(56) Entgegenhaltungen:
- EP-A- 1 290 965
- JP-A- 2004 121 564
- US-B1- 6 964 401

## Beschreibung

### Gebiet der Erfindung und Stand der Technik

Die Erfindung betrifft einen Untersetzer bzw. Bierdeckel. Bierdeckel sind aus der Praxis bekannt und in aller Regel aus einem Pappwerkstoff gefertigt. Hierbei handelt es sich um organische Fasern, welche zusammen mit einem Binder zu einem flächigen Gebilde gepresst sind. Der erhaltene Bierdeckel ist offenporig und weist eine beachtliche Saugfähigkeit auf, welche der Aufnahme von verschüttetem Bier oder Kondenswasser dient. Die (gesamte) obenliegende Oberfläche bekannter Bierdeckel bildet eine Saugfläche.

Es versteht sich, dass die Verwendung eines Bierdeckels nicht auf den Einsatz als Unterlage für ein Bierglas beschränkt ist. Vielmehr kann ein Bierdeckel als Unterlage für beliebige Getränkegefäße mit beliebigem Inhalt verwendet werden. Insofern wird in der vorliegenden Beschreibung der Ausdruck "Bierdeckel" als Synonym für einen saugfähigen "Untersetzer" benutzt.

Bierdeckel sind in aller Regel flächig ausgebildet, i.e. weisen zwei einander gegenüberliegende Hauptflächen auf. Die Dicke eines Bierdeckels liegt typischerweise im Bereich von 1 bis 5 mm. Die Umfangslinie eines Bierdeckels kann grundsätzlich beliebig sein. Neben der Kreisform oder der Rechteckform mit abgerundeten Ecken sind polygone Formen sowie auch gegenständliche Formen bekannt. Im Falle von gegenständlichen Formen wird ein Gegenstand schematisch nachgebildet, beispielsweise als Silhouette eines Kraftfahrzeuges.

Aus der Praxis ist es bekannt, Compact Discs auf verschiedenste Weise zu verpacken. Neben der Verpackung in Kassetten aus Polymerwerkstoffen sind auch Taschen für CDs bekannt, welche aus einem Papierwerkstoff bestehen und in welche eine CD einschiebbar ist. Im Rahmen der Neuerung wird der Begriff der Compact Disc für beliebige optische Speichermedien verwendet.

Aus der Literaturstelle EP 1290956 A1 ist ein Bierdeckel bekannt, welcher eine CD enthält. Hierbei wird die gesamte Oberfläche durch eine Folie abgedeckt, wodurch keine nennenswerte Saugfläche mehr zur Verfügung steht.

Aus der Literaturstelle DE 20021924 ist eine Postkarte mit einer CD bekannt. Eine Saugfläche enthält eine solche Postkarte nicht.

Die Literaturstelle FR 2762423 offenbart einen Behälter für eine CD mit Abdeckfolie. Eine Saugfläche ist nicht vorgesehen.

Die Literaturstelle DE 201 13 318 U1 beschreibt einen Bierdeckel mit CD, wobei die CD zwischen zwei Lagen aus Bierdeckelmaterial eingelegt und seitlich herausziehbar ist. Die Entnahme der CD ist umständlich.

Die Literaturstelle US 5,748,608 beschreibt einen Behälter für eine CD. Eine Saugfläche ist nicht eingerichtet. Ein ähnlicher Gegenstand ist der Literaturstelle DE 20108112 U1 entnehmbar.

Die Literaturstelle DE 20310242 U1 beschreibt einen Bierdeckel mit CD, wobei die CD der Einwirkung von Flüssigkeiten völlig frei ausgesetzt ist, was aus offensichtlichen Gründen stört.

Aus der Literaturstelle DE 296 11 936 U1 ist es bekannt, eine CD auf der der Informationsschicht abgewandten Seite mit Bierdeckelmaterial zu beschichten. Solche CDs sind auf den meisten Abspielgeräten nicht abspielbar aufgrund des hohen Gewichts und Unwuchten. Zudem würde aufgesaugte Flüssigkeit im Abspielgerät ausgeschleudert werden.

Bierdeckel stellen aufgrund ihrer Gestaltung Sammelobjekte dar. In anderen Bereichen ist es des Weiteren bekannt, Produkte beispielsweise mit Compact Discs als Mehrwert auszustatten bzw. zusätzlich zu verpacken. Im Falle der Bierdeckel scheint es wünschenswert, diese für eine benutzende Person noch attraktiver zu gestalten.

### Technisches Problem der Erfindung

Der Erfindung liegt das technische Problem zugrunde, einen Bierdeckel mit einem Mehrwertprodukt, insbesondere einer Compact Disc, auszustatten, und zwar ohne die Funktion des Bierdeckels zur Aufsaugung vergossener Flüssigkeiten wesentlich zu beeinträchtigen. Der Erfindung liegt das weitere technische Problem zugrunde, einen Bierdeckel mit CD anzugeben, welcher die CD zuverlässig bei Verwendung als Bierdeckel schützt, wobei jedoch die CD einfach und unkompliziert entnehmbar ist.

### Grundzüge der Erfindung und Ausführungsform

Zur Lösung dieses technischen Problems lehrt die Erfindung einen Bierdeckel mit Compact Disc, mit einem Bierdeckelkörper, wobei in einer Hauptfläche des Bierdeckelkörpers eine flächige Ausnehmung eingerichtet ist, deren Tiefe zumindest der Dicke der Compact Disc entspricht, jedoch kleiner als die Dicke des Bierdeckelkörpers außerhalb der Ausnehmung ist, wobei die Compact Disc in die Ausnehmung eingelegt ist, und mit einer die Ausnehmung überspannenden und mit der Hauptfläche des Bierdeckelkörpers außerhalb der Ausnehmung verbundenen Abdeckfolie, wobei die Umfangslinie der Abdeckfolie außerhalb der Umfangslinie der Ausnehmung, jedoch innerhalb der Umfangslinie des Bierdeckelkörpers verläuft, wodurch eine Ringsaugfläche gebildet ist.

Die Umfangslinie der Ausnehmung liegt außerhalb der Umfangslinie der Compact Disc und ist dieser vorzugsweise in der Kontur angepasst, beispielsweise in einem konstanten Umfangslinienabstand von 0,1 bis 2 mm. Die der Hauptfläche mit der Ausnehmung gegenüberliegende Hauptfläche ist vorzugsweise plan.

Die Ringsaugfläche beträgt vorzugsweise 5 bis 90 %, insbesondere 5 bis 40 % der Fläche der Hauptfläche. Der Bierdeckelkörper ist aus einem für Bierdeckel üblichen offenporigen Pappwerkstoff gebildet. Die Abdeckfolie ist aus einem vorzugsweise transparenten Polymerwerkstoff gebildet, welcher wasserundurchlässig ist. Die Abdeckfolie wird mittels eines Adhäsivs mit dem Bierdeckelkörper verbunden.

Durch den Bereich, in welchem die Abdeckfolie mit dem Bierdeckelkörper verbunden ist, ist eine Schutzringfläche gebildet. Hierbei weist die Umfangslinie der Abdeckfolie von der Umfangslinie der Ausnehmung vorzugsweise einen Abstand im Bereich von 1 bis 30 mm, vorzugsweise 4 bis 20 mm auf. Der Abstand der Umfangslinie der Abdeckfolie kann von der Umfangslinie des Bierdeckels einen Abstand von 1 bis 100 mm, vorzugsweise 1 bis 50 mm, höchstvorszugsweise 1 bis 30 mm, aufweisen.

Mit der Erfindung wird ein Bierdeckel geschaffen, welcher für eine benutzende Person von erhöhtem Interesse und auch Nutzwert ist. Einerseits kann der Bierdeckel mit der darin enthaltenen CD als Sammelobjekt behalten werden. Andererseits kann die Abdeckfolie einfach und leicht entfernt und die CD einem bestimmungsgemäßen Gebrauch zugeführt werden. Gleichzeitig ist gewährleistet, dass der Bierdeckel einerseits weiterhin seiner Funktion der Aufsaugung verschütteter Flüssigkeiten dient, und zwar auch bei Verwendung mit der die Abdeckfolie tragenden Hauptfläche nach oben, und andererseits aufgrund der Bemessungen insbesondere der Ringschutzfläche ein Eindringen aufgesaugter Flüssigkeiten bis zur Compact Disc und deren Verschmutzung verhindert ist.

Ein erfindungsgemäßer Bierdeckel lässt sich grundsätzlich auf zwei verschiedene Weisen herstellen. In einer ersten Ausführungsform eines Herstellungsverfahrens wird der Bierdeckelkörper, einschließlich der Ausnehmung, durch Pressen eines Gemischs aus Fasern und Binder in einer entsprechend ausgebildeten Negativform hergestellt. In einer zweiten Ausführungsform eines Herstellungsverfahrens wird zunächst ein erster Bierdeckelhalbkörper hergestellt, welcher sich von dem Bierdeckelkörper dadurch unterscheidet, dass dessen Dicke geringer ist. Bei einem zweiten Bierdeckelhalbkörper wird die Ausnehmung ausgestanzt. Beide Bierdeckelhalbkörper werden dann miteinander flächig verbunden, so dass eine einheitliche Umfangslinie des Bierdeckelkörpers entsteht. Durch beide Herstellungsvarianten wird folglich der Bierdeckelkörper mit der Ausnehmung hergestellt. Sodann wird eine CD in die Ausnehmung eingelegt und eine Abdeckfolie mit den vorstehend erläuterten Maßgaben aufgebracht bzw. aufgeklebt.

Im Folgenden wird die Erfindung anhand von lediglich ein Ausführungsbeispiel darstellenden Figuren näher erläutert.
Es zeigen:
- Figur 1:: Aufsicht auf einen erfindungsgemäßen Bierdeckel und
- Figur 2:: schematische Querschnittsdarstellung des Gegenstandes der Figur 1.

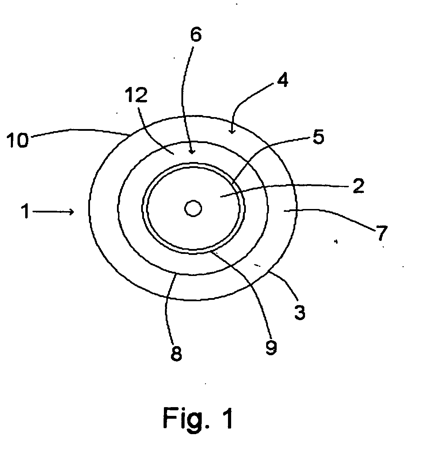

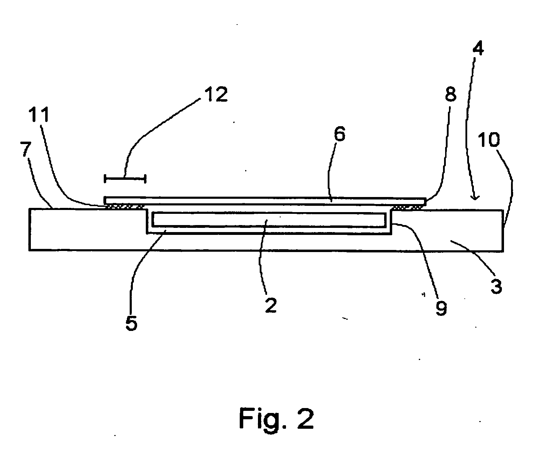

In der Figur 1 erkennt man einen Bierdeckel 1 mit einer Compact Disc 2. Der Bierdeckel 1 weist einen Bierdeckelkörper 3 auf, wobei in einer Hauptfläche 4 des Bierdeckelkörpers 3 eine flächige Ausnehmung 5 eingerichtet ist. Deren Tiefe entspricht zumindest der Dicke der Compact Disc 2, ist jedoch kleiner als die Dicke des Bierdeckelkörpers 3 außerhalb der Ausnehmung 5. Hierzu wird ergänzend auf die Darstellung der Figur 2 verwiesen. In die Ausnehmung 5 ist die Compact Disc 2 eingelegt. Des Weiteren ist eine die Ausnehmung 5 überspannende und mit der Hauptfläche 4 des Bierdeckelkörpers 3 außerhalb der Ausnehmung 5 verbundene Abdeckfolie 6 eingerichtet. In der Darstellung der Figur 2 ist die Abdeckfolie 6 aus zeichnerischen Gründen mit übertriebener Dicke wiedergegeben. Typische Dicken für geeignete Abdeckfolien aus Polymerwerkstoffen liegen im Bereich von 5 bis 1000 µm, insbes. 5 bis 100 µm.

Aus einer vergleichenden Betrachtung der Figuren 1 und 2 erkennt man, dass die Umfangslinie 8 der Abdeckfolie 6 außerhalb der Umfangslinie 9 der Ausnehmung 5, jedoch innerhalb der Umfangslinie 10 des Bierdeckelkörpers 3 verläuft, wodurch eine Ringsaugfläche 7 gebildet ist. Diese Ringsaugfläche 7 erlaubt die bestimmungsgemäße Aufnahme verschütteter Flüssigkeiten durch den Bierdeckel 1. Die Ringsaugfläche 7 beträgt im Ausführungsbeispiel ca. 15 % der Fläche der Hauptfläche 4.

Der Figur 2 entnimmt man, dass die Abdeckfolie 6 mittels eines Adhäsivs 11 mit dem Bierdeckelkörper 3 verbunden ist. Der Bereich, in welchem die Abdeckfolie 6 mit dem Bierdeckelkörper 3 verbunden ist, bildet eine Schutzringfläche 12. Hierbei ist der Abstand der Umfangslinie 8 der Abdeckfolie 6 von der Umfangslinie 9 der Ausnehmung 5 mit der Maßgabe gestaltet, dass verschüttete Flüssigkeiten nicht oder nur in geringem Maße bis zur Umfangslinie 9 der Ausnehmung 5 vordringen können. Hierdurch wird die Compact Disc 2 vor verschütteten Flüssigkeiten geschützt.

Es wird sich im Falle einseitig lesbarer Compact Discs 2 empfehlen, die lesbare Seite in der Ausnehmung 5 unten anzuordnen.

## Patentansprüche

1. Bierdeckel (1) mit einer Compact Disc (2)
mit einem Bierdeckelkörper (3), wobei in einer Hauptfläche (4) des Bierdeckelkörpers (3) eine flächige Ausnehmung (5) eingerichtet ist, deren Tiefe zumindest der Dicke der Compact Disc (2) entspricht, jedoch kleiner als die Dicke des Bierdeckelkörpers (3) außerhalb der Ausnehmung (5) ist,
wobei die Compact Disc (2) in die Ausnehmung (5) eingelegt ist, und
mit einer die Ausnehmung (5) überspannenden und mit der Hauptfläche (4) des Bierdeckelkörpers (3) außerhalb der Ausnehmung (5) verbundenen Abdeckfolie (6),
wobei die Umfangslinie (8) der Abdeckfolie (6) außerhalb der Umfangslinie (9) der Ausnehmung (5) verläuft,
**dadurch gekennzeichnet,**
**dass** die Umfangslinie (8) der Abdeckfolie (6) innerhalb der Umfangslinie (10) des Bierdeckelkörpers (3) verläuft, wodurch eine Ringsaugfläche (7) gebildet ist.

2. Bierdeckel (1) nach Anspruch 1, **dadurch gekennzeichnet, dass** die Ringsaugfläche (7) 5 bis 90 %, insbesondere 5 bis 40 %, der Fläche der Hauptfläche (4) beträgt.

3. Bierdeckel (1) nach Anspruch 1 oder 2, **dadurch gekennzeichnet, dass** der Bierdeckelkörper (3) aus einem offenporigen Pappwerkstoff gebildet ist.

4. Bierdeckel (1) nach einem der Ansprüche 1 bis 3, **dadurch gekennzeichnet, dass** die Abdeckfolie (6) aus einem vorzugsweise transparenten Polymerwerkstoff gebildet ist.

5. Bierdeckel (1) nach einem der Ansprüche 1 bis 4, **dadurch gekennzeichnet, dass** die Abdeckfolie (6) mittels eines Adhäsivs (11) mit dem Bierdeckelkörper (3) verbunden ist.

6. Bierdeckel (1) nach einem der Ansprüche 1 bis 5, **dadurch gekennzeichnet, dass** durch den Bereich, in welchem die Abdeckfolie (6) mit dem Bierdeckelkörper (3) verbunden ist, eine Schutzringfläche (12) gebildet ist.

## Claims

1. A coaster (1) comprising a compact disc (2),
comprising a coaster body (3), wherein in a main face (4) of the coaster body (3) an areal recess (5) is provided, the depth of which at least corresponds to the thickness of the compact disc (2), is however smaller than the thickness of the coaster body (3) outside the recess (5),
wherein the compact disc (2) is placed into the recess (5), and
comprising a cover foil (6) spanning the recess (5) and being connected with the main face (4) of the coaster body (3) outside the recess (5),
wherein the peripheral line (8) of the cover foil (6) extends outside the peripheral line (9) of the recess (5),
**characterized by**
that the peripheral line (8) of the cover foil (6) extends inside the peripheral line (10) of the coaster body (3), thus an annular absorption face (7) being formed.

2. The coaster (1) according to claim 1, **characterized by** that the annular absorption face (7) is 5 to 90 %, in particular 5 to 40 % of the area of the main face (4).

3. The coaster (1) according to claim 1 or 2, **characterized by** that the coaster body (3) is made from an open-pore carton material.

4. The coaster (1) according to one of claims 1 to 3, **characterized by** that the cover foil (6) is made from a preferably transparent polymeric material.

5. The coaster (1) according to one of claims 1 to 4, **characterized by** that the cover foil (6) is connected by means of an adhesive (11) to the coaster body (3).

6. The coaster (1) according to one of claims 1 to 5, **characterized by** that by the section, where the cover foil (6) is connected to the coaster body (3), a protective ring face (12) is formed.

## Revendications

1. Sous-bock (1) comprenant un disque compact (2),
comprenant un corps du sous-bock (3), dans lequel dans une face principale (4) du corps du sous-bock (3), un évidement (5) plan est prévu, dont la profondeur au moins correspond à l'épaisseur du disque compact (2), est cependant inférieure à l'épaisseur du corps du sous-bock (3) à l'extérieur de l'évidement (5),
dans lequel le disque compact (2) est positionné dans l'évidement (5), et
comprenant une feuille de couverture (6) couvrant l'évidement (5) et étant liée à la face principale (4) du corps du sous-bock (3) à l'extérieur de l'évidement (5),
dans lequel la ligne périphérique (8) de la feuille de couverture (6) s'étend à l'extérieur de la ligne périphérique (9) de l'évidement (5),
**caractérisé en ce**
**que** la ligne périphérique (8) de la feuille de couverture (6) s'étend à l'intérieur de la ligne périphérique (10) du corps du sous-bock (3), donc une face d'absorption (7) annulaire étant formée.

2. Sous-bock (1) selon la revendication 1, **caractérisé en ce que** la face d'absorption (7) annulaire est comprise entre 5 et 90 %, en particulier 5 et 40 % de la surface de la face principale (4).

3. Sous-bock (1) selon la revendication 1 ou 2, **caractérisé en ce que** le corps du sous-bock (3) est en une matière de carton à pores ouverts.

4. Sous-bock (1) selon une des revendications 1 à 3, **caractérisé en ce que** la feuille de couverture (6) de préférence est en une matière polymérique transparente.

5. Sous-bock (1) selon une des revendications 1 à 4, **caractérisé en ce que** la feuille de couverture (6) est liée au moyen d'un adhésif (11) au corps du sous-bock (3).

6. Sous-bock (1) selon une des revendications 1 à 5, **caractérisé en ce que** par la section, où la feuille de couverture (6) est liée au corps du sous-bock (3), une face annulaire protectrice (12) est formée.
